# EUROPÄISCHE PATENTSCHRIFT

(11) **EP 3 669 339 B1**
(45) Veröffentlichungstag und Bekanntmachung des Hinweises auf die Patenterteilung: **07.10.2026**
(21) Anmeldenummer: 18756174.1
(22) Anmeldetag: 10.08.2018
(51) Int. Cl.: G08C 17/02, F16P 1/00, H02G 1/00

(54) **VORRICHTUNG UND VERFAHREN ZUM ENTFERNTEN BEDIENEN EINER SICHERHEITSBEARBEITUNGSANLAGE**
DEVICE AND METHOD FOR REMOTE OPERATION OF A SAFETY PROCESSING SYSTEM
DISPOSITIF ET PROCÉDÉ DE FONCTIONNEMENT À DISTANCE D'UN SYSTÈME DE TRAITEMENT DE SÉCURITÉ

(30) Priorität: 18.08.2017 DE 102017118891
(43) Veröffentlichungstag der Anmeldung: 24.06.2020
(73) Patentinhaber: Intercable GmbH, 39031 Bruneck (IT)
(72) Erfinder: WEGER, Dietmar, 39030 Terenten (IT); RIEDIGER, Viktor, 33729 Bielefeld (DE)
(74) Vertreter: Neumann, Ditmar
(86) Internationale Anmeldenummer: PCT/EP2018/071729
(87) Internationale Veröffentlichungsnummer: WO 2019/034548

(56) Entgegenhaltungen:
- EP-A1- 2 843 637
- EP-A1- 3 144 430
- DE-A1- 102011 107 091
- US-A1- 2004 146 303

## Beschreibung

Die vorliegende Erfindung betrifft eine Vorrichtung und ein Verfahren zum Bedienen einer Sicherheitsbearbeitungsanlage, insbesondere einer Sicherheitsschneidanlage oder einer Sicherheitsverpressanlage.

Ein solches System ist zum Beispiel offenbart im Dokument EP 3 144 430 A1.

Bei sicherheitsrelevanten Bearbeitungsvorgängen muss ein Sicherheitsabstand von dem Benutzer zu der Anlage eingehalten werden. Ein sicherheitsrelevanter Vorgang kann beispielsweise ein Schneidvorgang sein, bei dem eine elektrischen Leitung, insbesondere aus Aluminium oder Kupfer durchtrennt werden soll. Zur Durchführung eines solchen Schneidvorgangs werden elektrisch isolierte Sicherheitsschneidanlagen verwendet, die auch als Kabelschneidgeräte bezeichnet werden. Derartige Sicherheitsschneidanlagen werden dann verwendet, wenn nicht sichergestellt werden kann, dass sich ein Kabel mit Nennspannung bis zu 60 kV und einen erheblichen Querschnitt von z.B. 85 mm² [Quadratmillimeter] und mehr in einem spannungsfreien Zustand befindet. Im Zusammenhang mit Sicherheitsschneidvorgängen macht beispielsweise die DIN EN 50340 (VDE 0682-661) genaue Angaben, welche sicherheitstechnisch relevanten Maßnahmen zutreffen bzw. einzuhalten sind.

Um den Sicherheitsanforderungen bei einem Durchtrennen eines Kabels zu entsprechen, sind elektrisch isolierte, hydraulisch betätigte Sicherheitsschneidanlagen bekannt. Die bekannten Sicherheitsschneidanlagen weisen einen Schneidkopf, der die Schneideinheit zum Schneiden eines Kabels enthält. Die Schneideinheit wird mittels hydraulischen Drucks betrieben. Der Schneidkopf ist über einen Isolierschlauch mit einer Pumpe verbunden, die den notwendigen Druck einer isolierenden hydraulischen Flüssigkeit in dem Isolierschlauch zum Antrieb des Schneidkopfes erzeugt. Der Isolierschlauch und die hydraulische Flüssigkeit bilden eine Isolierstrecke zwischen dem Schneidkopf und der Pumpe.

Zu einem Durchführen eines Schneidvorgangs wird der Schneidkopf am Kabel positioniert. Der Isolierschlauch, der eine vorgegebene Länge von z.B. 10 m aufweist wird vollständig und lose abgelegt. Hierbei ist jedoch zu beachten, dass sich bei Betätigung der Pumpe, die Position des Schneidkopfes am Kabel aufgrund der druckabhängigen Längenänderung des Schlauches nicht verändern. Die Pumpe wird in einem vorgegebenen Sicherheitsabstand von der Schneidstelle positioniert. Mittels der Pumpe wird der notwendige Druck zum Betätigen des Schneidkopfes erzeugt. Ein Schneidvorgang ist erst dann beendet, wenn ein vorgegebener Druck erreicht worden ist.

Beim Schneiden von Kabeln, falls das Kabel nicht spannungsfrei ist, kann es aufgrund der hohen Spannungen zu hohen Kurzschlussströmen und somit zu einer gefährlichen Lichtbogenentwicklung kommen, die eine Gefahr für den Benutzer darstellen. Daher muss vom Benutzer einen gewissen Sicherheitsabstand zu der Sicherheitsschneidanlage während des Sicherheitsschneidvorgangs eingehalten werden. Wird ein Schneidvorgang ausgelöst, so ist dieser vollständig durchzuführen, da die Möglichkeit besteht, dass der Schneidkopf, wenn das Kabel nicht spannungsfrei ist, am Kabel festgeschweißt wird. Daher entfällt die Möglichkeit einer Notabschaltung, was das Risiko für den Benutzer zusätzlich erhöht.

Hiervon ausgehend liegt der vorliegenden Erfindung die Aufgabe zugrunde, die Sicherheit eines Benutzers einer Sicherheitsbearbeitungsanlage, insbesondere einer Sicherheitsschneidanlage oder einer Sicherheitsverpressanlage, zu erhöhen.

Diese Aufgabe wird durch eine Vorrichtung zum entfernten Bedienen einer Sicherheitsbearbeitungsanlage, eine Sicherheitsbearbeitungsanlage mit einer Vorrichtung zum entfernten Bedienen und ein Verfahren zum entfernten Bedienen einer Sicherheitsbearbeitungsanlage gemäß den jeweiligen unabhängigen Ansprüchen gelöst. Die jeweiligen abhängigen Ansprüche sind auf vorteilhafte Ausgestaltungen gerichtet. Es ist darauf hinzuweisen, dass die in den abhängigen Ansprüchen aufgeführten Merkmale in beliebiger, technologisch sinnvoller Weise, miteinander kombiniert werden können und weitere Ausführungsformen der Erfindung definieren. Darüber hinaus werden in den Ansprüchen angegebenen Merkmale in der Beschreibung näher präzisiert und erläutert, wobei weitere bevorzugte Ausgestaltungen der Erfindung dargestellt werden.

Die erfindungsgemäße Vorrichtung zum entfernten Bedienen einer Sicherheitsbearbeitungsanlage, insbesondere einer Sicherheitsschneidanlage oder einer Sicherheitsverpressanlage umfasst eine Funkfernbedienung, die einen ersten Funktransceiver aufweist, und eine der Sicherheitsbearbeitungsanlage zuordenbare Steuerung, die einen zweiten Funktransceiver aufweist. Des Weiteren ist eine Abstandsüberwachung vorgesehen, die zu einem Ermitteln eines Abstands D zwischen der Funkfernbedienung und der Steuerung eingerichtet und geeignet ist. Der erste Funktransceiver und der zweite Funktransceiver sind miteinander kommunikativ verbindbar und zu einem gegenseitigen Datenaustausch über Funksignale in einem verbundenen Zustand eingerichtet. Die Abstandsüberwachung und zumindest die Funkfernbedienung oder die Steuerung sind kommunikativ verbunden und zu einem Übertragen des Abstands D oder eines dem Abstand D entsprechenden Signals von der Abstandsüberwachung an zumindest die Funkfernbedienung oder die Steuerung eingerichtet. Ferner ist die Steuerung oder die Funkfernbedienung zu einem Ableiten eines Freigabesignals für einen Sicherheitsbearbeitungsvorgang aus dem entsprechend von der Funkfernbedienung oder der Abstandsüberwachung an die Steuerung bzw. die Funkfernbedienung übertragenen Abstand D oder eines dem Abstand D entsprechenden Signals und einem vorbestimmten Sicherheitsabstand Dₘᵢₙ sowie entsprechend zu einem Übertragen des Freigabesignals an die Steuerung eingerichtet. Zudem ist die Steuerung zu einem Auslösen eines Sicherheitsbearbeitungsvorgangs basierend auf einem Anliegen eines benutzerinduzierten Startsignals und des Freigabesignals an der Steuerung eingerichtet.

Die Sicherheitsbearbeitungsanlage kann durch Einsatz verschiedener Werkzeugköpfe für unterschiedliche Aufgaben umgerüstet werden. Beispielsweise kann ein Sicherheitsschneidkopf für Sicherheitsschneidvorgänge oder ein Sicherheitspresskopf für Sicherheitsverpressvorgänge in der Sicherheitsbearbeitungsanlage eingesetzt werden.

Durch die erfindungsgemäße Vorrichtung zum entfernten Bedienen der Sicherheitsbearbeitungsanlage (z. B. Sicherheitsschneidanlage, Sicherheitsverpressanlage, usw.) wird der Schutz eines Benutzers der Sicherheitsbearbeitungsanlage erhöht.

Die Steuerung der Vorrichtung weist vorzugsweise eine eigene Energieversorgung auf. Es besteht jedoch auch die Möglichkeit, dass die Steuerung der Vorrichtung über die Sicherheitsbearbeitungsanlage mit elektrischer Energie versorgt wird. Dabei kann die Sicherheitsschneidanlage eine Energieversorgung wie eine Batterie, einen Akkumulator oder ein mit einem Stromnetz verbundenes Netzteil aufweisen. Die Steuerung kann als separates Modul mit einer Sicherheitsbearbeitungsanlage verbunden werden. Dies eröffnet die Möglichkeit bereits vorhandene Sicherheitsbearbeitungsanlagen mit der erfindungsgemäßen Vorrichtung auszustatten. Vorzugsweise ist die Steuerung ein integraler Bestandteil einer Sicherheitsbearbeitungsanlage.

Weist die Sicherheitsbearbeitungsanlage eine elektrisch betriebene Pumpe auf, deren Energieversorgung mittels einer Batterie oder eines Akkumulators erfolgt, so ist die Steuerung vorzugsweise derart ausgestaltet, dass ein Sicherheitsbearbeitungsvorgang nur dann ausgelöst werden kann, wenn genug elektrische Energie für einen kompletten Sicherheitsbearbeitungsvorgang vorhanden ist.

Die Funkfernbedienung wird vorzugsweise durch eine eigene Energiequelle wie eine Batterie mit elektrischer Energie versorgt. Die elektrische Energie kann mit einer Spannung von 5 V [Volt] bereitgestellt werden.

Die Funkfernbedienung und/oder die Steuerung können eine integrierte Schaltung zur Signalverarbeitung umfassen. Die integrierte Schaltung kann ein Mikrokontroller (µC) oder eine anwendungsspezifische integrierte Schaltung (application-specific-integrated circuit, ASIC) oder ein anwendungsspezifisches Standardprodukt (application specific standard product, ASSP) oder eine im Feld programmierbare Logik-Gatter-Anordnung (field programmable gate array, FPGA) oder dergleichen sein. Die integrierte Schaltung kann einen flüchtigen oder einen nicht-flüchtigen Speicher umfassen. Der flüchtige Speicher kann ein Speicher mit wahlfreiem/direktem Zugriff (Random Access Memory, RAM) sein. Der nicht-flüchtige Speicher kann ein Sekundärspeicher wie z. B. eine Festplatte, eine CD, eine DVD, eine Diskette oder ein Halbleiterspeicher (z. B. EPROM oder Flash-Speicher oder dergleichen) sein.

Sobald die Funkfernbedienung über den ersten Funktransceiver mit der Steuerung über den zweiten Funktransceiver kommunikativ verbunden ist, kann der Benutzer, nachdem er die Sicherheitsbearbeitungsanlage für den Bearbeitungsvorgang entsprechend vorbereitet und eingestellt hat, den Sicherheitsbearbeitungsvorgang auslösen. Dazu muss er zum einen das Startsignal auslösen, indem er eine entsprechende Eingabe an der Funkfernbedienung und/oder der Steuerung vornimmt. Damit der Sicherheitsbearbeitungsvorgang von der Steuerung ausgelöst wird, muss zudem der Abstand D mindestens gleich dem vorgegebenen Sicherheitsabstand Dₘᵢₙ oder größer sein. Erst wenn diese Bedingung erfüllt ist, gibt die Steuerung das Freigabesignal aus. Der Sicherheitsbearbeitungsvorgang wird dabei von der Steuerung immer nur dann ausgelöst, wenn sowohl das Startsignal, das durch den Benutzer ausgelöst wurde, und das Freigabesignal, das auf dem Abstand D basiert, vorliegen.

Die Abstandsüberwachung kann integraler Bestandteil der Steuerung oder alternativ der Funkfernbedienung sein. So kann der Abstand D zwischen Funkfernbedienung und Steuerung entweder von der Steuerung (mittels der Abstandsüberwachung) bestimmt und direkt in der Steuerung für die Ableitung des Freigabesignals verwendet werden oder von der Funkfernbedienung (mittels der Abstandsüberwachung) bestimmt und über den ersten Funktransceiver an den zweiten Funktransceiver der Steuerung für die Ableitung des Freigabesignals gesendet werden.

Ist die Abstandsüberwachung in die Steuerung integriert, so hat dies den Vorteil, dass der Abstand D nicht erst an die Steuerung gesendet werden muss, sondern direkt zur Ableitung des Freigabesignals in der Steuerung vorliegt. Die Ableitung des Freigabesignals aus dem aktuellen Abstand D zwischen der Funkfernbedienung und der Steuerung sowie dem vorgegebenen Sicherheitsabstand Dₘᵢₙ kann mit einer Periode von 1 kHz [Kilohertz] in der Steuerung erfolgen. Es wäre alternativ auch denkbar, dass die Ableitung des Freigabesignals in der Funkfernbedienung erfolgt und das Freigabesignal an die Steuerung gesendet wird, um den Sicherheitsbearbeitungsvorgang auszulösen.

Der erste Funktransceiver und der zweite Funktransceiver können in einem ISM-Band (Industrial, Scientific and Medical Band) vorzugsweise in einem Frequenzband zwischen ungefähr 2,4 GHz [Gigahertz] - 5 GHz betrieben werden und miteinander kommunizieren. Ein Informationsaustausch zwischen der Funkfernbedienung und der Steuerung bzw. dem ersten Funktransceiver und dem zweiten Funktransceiver kann in definierten Zeitintervallen, bevorzugt in Zeitintervallen von 0.5 s [Sekunden] erfolgen. Der Informationsaustausch erfolgt vorzugsweise verschlüsselt.

Sollte während eines bereits laufenden Sicherheitsbearbeitungsvorgangs der vorgegebene Sicherheitsabstand Dₘᵢₙ unterschritten werden, so kann ein akustisches und/oder optisches Warnsignal für den Benutzer ausgegeben werden. Der Mindestabstand Dₘᵢₙ kann in einem Setup eingestellt werden und so an verschiedene Vorgaben für unterschiedliche Sicherheitsbearbeitungsvorgänge und/oder Situationen angepasst werden. Es kann auch vorgesehen werden, eine Wahlmöglichkeit zwischen einem Sicherheitsbearbeitungsmodus und einem normalen Bearbeitungsmodus bereitzustellen, sodass je nach aktueller Aufgabe und/oder Situation ein Sicherheitsbearbeitungsvorgang oder ein normaler Bearbeitungsvorgang durchgeführt werden kann.

Die Vorrichtung zum entfernten Bedienen der Sicherheitsbearbeitungsanlage bietet eine sicherere aktive Überwachung des Abstands zwischen Benutzer und Sicherheitsbearbeitungsanlage. Die Sicherheit für den Benutzer wird durch die erfindungsgemäße Vorrichtung deutlich erhöht, da eine direkte Abstandsmessung erfolgt und der Sicherheitsbearbeitungsvorgang nur dann ausgelöst und durchgeführt wird, wenn der Sicherheitsabstand eingehalten ist. Zudem kann bei Sicherheitsbearbeitungsanlagen mit einer erfindungsgemäßen Vorrichtung zum Entfernten Bedienen auf einen elastischen Isolierschlauch mit einer Länge entsprechend des Sicherheitsabstands Dₘᵢₙ zwischen dem Werkzeugkopf und der Pumpe verzichtet werden, da der Sicherheitsabstand Dₘᵢₙ zwischen dem Benutzer und dem Werkzeugkopf durch die Vorrichtung zum entfernten Bedienen sichergestellt wird.

Gemäß einem weiteren vorteilhaften Aspekt ist die Abstandsüberwachung zu einem Messen von Feldstärken der Funksignale zwischen dem ersten Funktransceiver und dem zweiten Funktransceiver und einem Ableiten des Abstands D aus den gemessenen Feldstärken eingerichtet und bestimmt.

Die Funkfernbedienung und die Steuerung senden über die Funktransceiver Informationen bzw. Daten. Diese Daten können auch nur dem Zweck dienen, den Abstand D zwischen der Funkfernbedienung und der Steuerung und somit der Sicherheitsbearbeitungsanlage zu ermitteln. Die Feldstärke P der Funksignale zwischen dem ersten Funktransceiver und dem zweiten Funktransceiver ist im Wesentlichen umgekehrt proportional zu dem Abstand D zwischen Quelle und Messpunkt im Kubik: $P ∼ 1 / {D}^{3}$

Hier können der erste Funktransceiver und der zweite Funktransceiver als Quelle und/oder als Messpunkt dienen. Über eine Amplitude der Funksignale am empfangenden Transceiver, die der Feldstärke P entspricht, kann, wenn die ursprüngliche Amplitude (Sendeleistung) bekannt ist, der Abstand D zwischen dem sendenden Transceiver und dem empfangenden Transceiver über die obenstehende Beziehung ermittelt werden.

Die Ermittlung des Abstands D über die Feldstärke bietet eine genaue und robuste Möglichkeit, den Abstand D und somit die Einhaltung des vorgegebenen Sicherheitsabstands Dₘᵢₙ zu gewährleisten.

Gemäß einem weiteren Aspekt ist die Abstandsüberwachung zu einem Berechnen von Wegstrecken der Funkfernbedienung basierend auf Messwerten wenigstens eines räumlichen Bewegungseinheit, insbesondere auf Beschleunigungswerten eines Beschleunigungsmessers, der an der Funkfernbedienung angeordnet ist und einem Ableiten des Abstands D aus den berechneten Wegstrecken oder aus den gemessenen Feldstärken und den berechneten Wegstrecken eingerichtet und bestimmt.

Die räumliche Bewegungseinheit ist vorzugsweise durch eine inertiale Messeinheit gebildet. Die inertiale Messeinheit, umfasst vorzugsweise eine räumliche Kombination mehrerer Inertialsensoren wie Beschleunigungssensoren, Rotationsmesser, Rotationsfühler, Drehmomentgeber, Gyroskopen, elektronischer Kompass.

Die inertiale Messeinheit kann vorzugsweise für drei senkrecht zueinander stehende Richtungen je einen Beschleunigungssensor umfassen. Aus den Beschleunigungswerten kann durch Aufsummieren bzw. Integration über die Zeit die zurückgelegte Wegstrecke in jede der drei Richtungen ermittelt werden. Basierend auf diesen Wegstrecken kann der Abstand D von einem Startpunkt, hier der Sicherheitsbearbeitungsanlage und der aktuellen Position der Funkfernbedienung und somit des Benutzers abgeleitet werden.

Eine Abstandsüberwachung kann auch zusätzlich oder alleine auf der Basis von GPS-Daten erfolgen.

Der vorgeschriebene Sicherheitsabstand sollte im Wesentlichen in einer horizontalen Ebene gegenüber der Sicherheitsbearbeitungsanlage erfolgen, da aufgrund beispielsweise einer Lichtbogenentwicklung ein Abstand nur oberhalb der Sicherheitsverarbeitungsanlage nicht akzeptabel ist. Durch die Ableitung des Abstands aus den Wegstrecken kann ein horizontaler Abstand abgeleitet werden und somit die Einhaltung des Sicherheitsabstands in einer im Wesentlichen horizontalen Ebene sichergestellt werden.

Ferner kann die Ableitung des Abstands D sowohl aus der gemessenen Feldstärke als auch aus den berechneten Wegstrecken erfolgen, um die Präzision zu erhöhen, bzw. um eine Plausibilitätsüberprüfung der jeweils ermittelten Abstände durchführen zu können. Dies erhöht die Sicherheit der Vorrichtung noch weiter.

Gemäß einem weiteren Aspekt weist die Funkfernbedienung eine Eingabeeinrichtung auf, die mit dem ersten Funktransceiver kommunikativ verbunden ist. Weiterhin ist die Funkfernbedienung zu einem Senden des Startsignals über den ersten Funktransceiver auf eine Eingabe mittels der Eingabevorrichtung hin eingerichtet. Ferner ist die Steuerung zu einem Empfangen des Startsignals über den zweiten Funktransceiver eingerichtet.

Der Benutzer kann über die Funkfernbedienung das Startsignal auslösen. Dies bietet verschiedene Möglichkeiten den Sicherheitsbearbeitungsvorgang auszulösen. Der Benutzer kann zuerst das Startsignal an der Funkfernbedienung auslösen und sich dann von der Sicherheitsbearbeitungsanlage entfernen, sodass der Sicherheitsbearbeitungsvorgang erst dann ausgelöst wird, wenn er den vorgegebenen Sicherheitsabstand Dₘᵢₙ erreicht hat. Alternativ kann sich der Benutzer auch erst um den Sicherheitsabstand Dₘᵢₙ oder mehr entfernen und dann das Startsignal über die Fernbedienung absetzen. Es ist jedoch nicht möglich, den Sicherheitsbearbeitungsvorgang auszulösen, wenn der Benutzer zunächst weit genug entfernt ist und sich dann wieder in einen Bereich begibt, der einen Abstand D aufweist, der geringer als der Sicherheitsabstand Dₘᵢₙ ist. Denn dann würde zwar zunächst das Freigabesignal vorliegen, da der Sicherheitsabstand eingehalten wurde, jedoch fällt das Freigabesignal sofort weg, wenn sich der Benutzer nichtmehr weit genug entfernt aufhält, sodass auch wenn er das Starsignal auslöst, der Sicherheitsbearbeitungsvorgang nicht ausgelöst wird. Dies würde erst geschehen, wenn sich der Benutzer wieder weit genug entfernt und der Sicherheitsabstand Dₘᵢₙ erreicht ist und ein Startsignal erneut abgibt. Bei einem Unterschreiten des Sicherheitsabstandes kann auch ein Warnsignal erzeugt werden.

Gemäß eines weiteren vorteilhaften Ausgestalltung des Verfahrens wird vorgeschlagen, dass mit dem Auslösen eines Startsignals auch ein Countdown gestartet wird. Erfolgt innerhalb eines einstellbaren Zeitfensters (Countdown) kein auslösen des Sicherheitsbearbeitungsvorgang, so wird der Vorgang abgebrochen und dem Benutzer signalisiert.

Dies bietet eine variablere Gestaltung des Arbeitsablaufs für den Benutzer, ohne dabei die Sicherheit des Benutzers zu gefährden, da die Einhaltung des Sicherheitsabstands beim Auslösen des Sicherheitsbearbeitungsvorgangs immer gewährleistet ist.

Die Funkfernbedienung kann eingerichtet sein, um auf eine Eingabe durch den Benutzer hin ein Rückstellsignal an die Steuerung zu senden. Dieses Rückstellsignal veranlasst die Steuerung einen Rückstellvorgang eines Hubzylinders der Sicherheitsbearbeitungsanlage und somit ein Zurückziehen eines Werkzeugs in seine Ausgangsposition zu bewirken.

Gemäß einem weiteren Aspekt weisen die Funkfernbedienung und Steuerung jeweils eine eindeutige Adresse auf. Mittels der eindeutigen Adressen sind die Funkfernbedienung und die Steuerung eindeutig miteinander koppelbar.

Beim Koppeln gleichen die Funkfernbedienung und/oder die Steuerung eine gespeicherte eindeutige Adresse (aus Einlernvorgang bekannt) mit der Adresse des jeweils anderen ab. Stimmen die gespeicherte und die Adresse des Kommunikationspartners überein, wird die Verbindung zwischen Funkfernbedienung und Steuerung aufgebaut und aufrechterhalten.

Die eindeutige Kopplung von Funkfernbedienung und Steuerung erhöht die Sicherheit der Sicherheitsbearbeitungsanlage, da es nicht zu falschen Datenübertragungen und somit ungewollten Eingaben oder falschen Abstandsableitungen durch andere Funkgeräte kommen kann.

Gemäß einem weiteren Aspekt umfasst die Vorrichtung eine Sturzüberwachung, die zu einem Ermitteln eines Vorliegens eines Sturzes eingerichtet ist. Dabei ist die Sturzüberwachung zu einem Ableiten des Vorliegens eines Sturzes basierend auf den Beschleunigungswerten des Beschleunigungsmessers oder basierend auf Winkelbeschleunigungswerten eines Winkelbeschleunigungsmessers, der an der Funkfernbedienung angeordnet ist, eingerichtet. Ferner ist die Steuerung oder die Funkfernbedienung zum Ableiten des Freigabesignals zusätzlich unter Berücksichtigung des Vorliegens eines Sturzes eingerichtet.

Der Winkelbeschleunigungsmesser kann Winkelbeschleunigungssensoren für drei Drehungen umfassen, die senkrecht zueinander stehen, um Winkelbeschleunigungswerte in den drei senkrechten Drehrichtungen zu ermitteln. Durch die Überwachung der Beschleunigungswerte und/oder der Winkelbeschleunigungswerte kann beispielsweise ein Sturz eines Benutzers erkannt werden, da dabei besonders hohe Beschleunigungswerte und Winkelbeschleunigungswerte vorliegen. Basierend auf der Erkennung eines Sturzes kann die Auslösung des Sicherheitsbearbeitungsvorgangs verhindert werden. Dazu wird bei der Ableitung des Freigabesignals mitberücksichtigt, ob ein Sturz vorliegt. Falls dem so ist, wird der Sicherheitsbearbeitungsvorgang auch wenn der Sicherheitsabstand eingehalten wurde nicht gestartet bzw. kein Freigabesignal erzeugt. Höhere Beschleunigungswerte und/oder Winkelbeschleunigungswerte können auch dann vorliegen, wenn die Funkfernbedienung fallengelassen oder geworfen wird.

Durch die Sturzüberwachung wird die Sicherheit bei der Benutzung der Sicherheitsbearbeitungsanlage noch weiter gesteigert, da über die Bereitschaft des Benutzers indirekt mitüberwacht wird. Liegen höhere Beschleunigungswerte und/oder Winkelbeschleunigungswerte vor, so können diese ein Indiz für eine unsachgemäße Handhabung im Zusammenhang mit der Sicherheitsbearbeitungsanlage stehen.

Gemäß einem weiteren Aspekt weist die Funkfernbedienung zumindest eine Anzeigeeinrichtung, bevorzugt zumindest eine Leuchtdiode oder eine graphische Anzeige als Anzeigeeinrichtung, und besonders bevorzugt zumindest eine Status-LED und eine Aktivitäts-LED und ein graphisches Display als Anzeigeeinrichtung auf.

Dem Benutzer werden über die Anzeigeeinrichtung der Funkfernbedienung Informationen im Zusammenhang mit der Sicherheitsbearbeitungsanlage und/oder dem Sicherheitsbearbeitungsvorgang bereitgestellt. So kann dem Benutzer beispielsweise mittels der Status-LED der momentane Status der Sicherheitsbearbeitungsanlage angezeigt werden. Mittels der Aktivitäts-LED kann dem Benutzer der Verbindungsstatus der Funkverbindung zwischen der Funkfernbedienung und der Steuerung angezeigt werden. Zudem kann dem Benutzer das Erreichen des vorbestimmten Sicherheitsabstands Dₘᵢₙ über das grafische Display oder weitere LEDs angezeigt werden.

Durch die Bereitstellung von Informationen zu der Sicherheitsbearbeitungsanlage und/oder dem Sicherheitsbearbeitungsvorgang an der Funkfernbedienung wird die Handhabung für den Benutzer erleichtert und komfortabler.

Die Eingabeeinrichtung der Funkfernbedienung kann durch Druckknöpfe, Drehknöpfe, Schalter und dergleichen gebildet werden. Bevorzugt kann ein berührungsempfindliches Display als kombinierte Eingabe- und Anzeigeeinrichtung bei der Funkfernbedienung Verwendung finden.

Gemäß einem weiteren Aspekt ist die Funkfernbedienung zu einem Anzeigen des von der Abstandsüberwachung oder der Steuerung an die Funkfernbedienung übertragenen Abstands durch die Anzeigeeinrichtung eingerichtet.

Der momentane Abstand D kann beispielsweise über das grafische Display dem Benutzer angezeigt werden.

Durch die Bereitstellung des momentanen Abstands kann der Benutzer noch schneller den Sicherheitsbearbeitungsvorgang auslösen, da er mit einem Blick sieht, wann er den benötigten Sicherheitsabstand erreicht hat.

Gemäß einem weiteren Aspekt weist die Steuerung zumindest eine Anzeigeeinrichtung, bevorzugt zumindest eine Leuchtdiode oder eine graphische Anzeige als Anzeigeeinrichtung, und besonders bevorzugt zumindest eine Status-LED oder ein graphisches Display als Anzeigeeinrichtung auf.

Dem Benutzer werden über die Anzeigeeinrichtung der Steuerung Informationen zu der Sicherheitsbearbeitungsanlage und/oder dem Sicherheitsbearbeitungsvorgang bereitgestellt. So kann dem Benutzer beispielsweise mittels der Status-LED der momentane Status der Sicherheitsbearbeitungsanlage angezeigt werden. Dabei kann die Status-LED der Funkfernbedienung die Status-LED der Steuerung wiederspiegeln, sodass beide Status-LEDs immer die gleiche Anzeige liefern und damit in gleicher Weise über den momentanen Zustand der Sicherheitsbearbeitungsanlage informieren. Mittels der Aktivitäts-LED kann dem Benutzer der Verbindungsstatus der Funkverbindung zwischen der Funkfernbedienung und der Steuerung angezeigt werden.

Durch die Bereitstellung von Informationen zu der Sicherheitsbearbeitungsanlage und/oder dem Sicherheitsbearbeitungsvorgang an der Steuerung wird die Handhabung für den Benutzer erleichtert und komfortabler.

Gemäß einem weiteren Aspekt ist die Steuerung mit zumindest einem Sensor der Sicherheitsbearbeitungsanlage verbunden und zu einem Auslesen eines Fortschrittswerts des Sicherheitsbearbeitungsvorgangs eingerichtet. Dabei sind die Steuerung und die Funkfernbedienung zu einem Übertragen des Fortschrittswerts von der Steuerung an die Funkfernbedienung eingerichtet. Ferner ist die Funkfernbedienung zu einem Anzeigen des Fortschrittswerts durch die Anzeigeeinrichtung eingerichtet.

Der Sensor kann beispielsweise ein Positionssensor und/oder ein Druck-/Kraftsensor sein, dessen Sensorwert Auskunft über den Fortschritt des Sicherheitsbearbeitungsvorgangs gibt. Aus dem Sensorwert wird ein Fortschrittswert zu dem Sicherheitsbearbeitungsvorgang abgeleitet und mittels Funksignalen von dem zweiten Transceiver der Steuerung an den ersten Transceiver der Funkfernbedienung übertragen. An der Funkfernbedienung wird der Fortschrittswert, beispielsweise über einen Fortschrittsbalken auf dem grafischen Display der Anzeigeeinrichtung, dargestellt.

Die Bereitstellung von Informationen über den Fortschritt des Sicherheitsbearbeitungsvorgangs, führt zu einem erhöhten Komfort und einer erhöhten Sicherheit für den Benutzer, da er mitverfolgen kann wie der Sicherheitsbearbeitungsvorgang verläuft und wann dieser endgültig abgeschlossen ist und gefahrlos der Sicherheitsabstand wieder unterschritten werden kann.

Die vorliegende Erfindung betrifft weiterhin eine Sicherheitsbearbeitungsanlage, insbesondere eine Sicherheitsschneidanlage oder eine Sicherheitsverpressanlage mit einer Vorrichtung zum entfernten Bedienen der Sicherheitsbearbeitungsanlage. Die Vorrichtung zum entfernten Bedienen der Sicherheitsbearbeitungsanlage umfasst eine Funkfernbedienung, die einen ersten Funktransceiver aufweist, und eine an der Sicherheitsbearbeitungsanlage angeordnet Steuerung, die einen zweiten Funktransceiver aufweist. Des Weiteren ist eine Abstandsüberwachung, die zu einem Ermitteln eines Abstands D zwischen der Funkfernbedienung und der Steuerung eingerichtet ist, vorgesehen.

Der erste Funktransceiver und der zweite Funktransceiver sind miteinander kommunikativ verbindbar und zu einem gegenseitigen Datenaustausch über Funksignale in einem verbundenen Zustand eingerichtet und bestimmt.

Weiterhin sind die Abstandsüberwachung und zumindest die Funkfernbedienung oder die Steuerung kommunikativ verbunden und zu einem Übertragen des Abstands D von der Abstandsüberwachung entsprechend an zumindest die Funkfernbedienung oder die Steuerung eingerichtet. Ferner ist die Steuerung oder die Funkfernbedienung zu einem Ableiten eines Freigabesignals für einen Sicherheitsbearbeitungsvorgang aus dem entsprechend von der Funkfernbedienung oder der Abstandsüberwachung an die Steuerung bzw. die Funkfernbedienung übertragenen Abstand D und einem vorbestimmten Sicherheitsabstand Dₘᵢₙ sowie entsprechend zu einem übertragen des Freigabesignals an die Steuerung eingerichtet. Zudem ist die Steuerung zu einem Starten des Sicherheitsbearbeitungsvorgangs basierend auf einem Anliegen eines benutzerinduzierten Startsignals und des Freigabesignals an der Steuerung eingerichtet.

Die Sicherheitsbearbeitungsanlage umfasst vorzugsweise eine Betätigungseinheit mittels derer ein Bearbeitungskopf mittelbar oder unmittelbar betätigbar ist. Der Bearbeitungskopf weist vorzugsweise eine Bearbeitungseinheit auf. Die Betätigungseinheit ist vorzugsweise eine öldynamische Pumpe. Die Bearbeitungseinheit kann beispielsweise ein Schneidwerkzeug, ein Presswerkzeug, ein Stanzwerkzeug und dergleichen sein. Das Schneidwerkzeug kann insbesondere für Kabel bevorzugt für Kabel mit einem Durchmesser zwischen ungefähr 85 mm [Millimeter] bis 120 mm, ausgelegt sein. Die Steuerung kann an eine Anlagensteuerung Sicherheitsbearbeitungsanlage direkt oder über einen Adapter angeschlossen werden. Alternativ, kann die Steuerung integraler Bestandteil der Anlagensteuerung sein.

Die Vorteile und Einzelheiten einer Vorrichtung zum entfernten Bedienen einer Sicherheitsbearbeitungsanlage gelten auch für eine Sicherheitsbearbeitungsanlage, insbesondere Sicherheitsschneidanlage oder Sicherheitsverpressanlage, mit einer entsprechenden Vorrichtung zum entfernten Bedienen der Sicherheitsbearbeitungsanlage, wie sie vorstehend dargestellt und erläutert ist.

Gemäß einem weiteren Aspekt ist bei der Sicherheitsbearbeitungsanlage die Vorrichtung zum entfernten Bedienen der Sicherheitsbearbeitungsanlage gemäß einer der zuvor beschriebenen Ausführungsformen ausgeführt.

Die vorliegende Erfindung betrifft ferner ein Verfahren zum entfernten Bedienen einer Sicherheitsbearbeitungsanlage, insbesondere, einer Sicherheitsschneidanlage oder einer Sicherheitsverpressanlage. Das Verfahren umfasst die folgenden Schritte:
a) Ermitteln eines Abstands D zwischen einer Funkfernbedienung und einem zweiten Funktransceiver, der einem sicherheitsrelevanten Bereich der Sicherheitsbearbeitungsanlage zugeordnet ist.
b) Ableiten eines Freigabesignals für einen Sicherheitsbearbeitungsvorgang aus dem ermittelten Abstand D und einem vorbestimmten Sicherheitsabstand Dₘᵢₙ.
c) Starten des Sicherheitsbearbeitungsvorgangs basierend auf einem Anliegen eines benutzerinduzierten Startsignals und des Freigabesignals an der Steuerung.

In Schritt a) wird ermittelt, wie weit die Funkfernbedienung und damit der Benutzer einem sicherheitsrelevanten Bereich der Sicherheitsbearbeitungsanlage entfernt ist. Sobald der Abstand D mindestens gleich dem vorgegebenen Sicherheitsabstand Dₘᵢₙ ist, wird ein Freigabesignal ausgegeben. Erst wenn das Freigabesignal und ein vom Benutzer induziertes Starsignal vorliegen, wird der Sicherheitsbearbeitungsvorgang gestartet.

Durch die direkte Überwachung des Abstands D wird die Sicherheit von Sicherheitsbearbeitungsanlagen signifikant erhöht, da der Sicherheitsbearbeitungsvorgang erst gestartet werden kann, wenn mindestens der Sicherheitsabstand eingehalten ist.

Gemäß einem weiteren Aspekt umfasst das Ermitteln des Abstands D die folgenden Schritte:
a1.1) Messen von Feldstärken von Funksignalen zwischen einem ersten Funktransceiver der Funkfernbedienung und einem zweiten Funktransceiver
a1.2) Ableiten des Abstands D aus den gemessenen Feldstärken.

Über die Beziehung $P ∼ 1 / {D}^{3}$ kann eine Amplitude der Funksignale am empfangenden Transceiver, die der Feldstärke P entspricht, wenn die ursprüngliche Amplitude (Sendeleistung) bekannt ist, der Abstand D zwischen dem sendenden Transceiver und dem empfangenden Transceiver und somit zwischen Funkfernbedienung und Steuerung oder umgekehrt ermittelt werden.

Die Ermittlung des Abstands D über die Feldstärke bietet eine genaue und robuste Möglichkeit, den Abstand D und somit die Einhaltung des vorgegebenen Sicherheitsabstands Dₘᵢₙ zu gewährleisten.

Gemäß einem weiteren Aspekt umfasst das Ermitteln des Abstands D die folgenden Schritte:
a2.1) Berechnen von Wegstrecken der Funkfernbedienung basierend auf Beschleunigungswerten aus einem Beschleunigungsmesser und/oder den Messwerten einer inertialen Messeinheit, der bzw. die an der Funkfernbedienung angeordnet ist.
a2.2) Ableiten des Abstands D aus den berechneten Wegstrecken oder aus den gemessenen Feldstärken und den berechneten Wegstrecken.

Aus den Messwerten, insbesondere den Beschleunigungswerten, die in drei zueinander senkrechten Richtungen ermittelt werden, kann durch Aufsummieren bzw. Integration über die Zeit die zurückgelegte Wegstrecke in jede der drei Richtungen berechnet werden. Basierend auf diesen Wegstrecken kann der Abstand D von einem Startpunkt, hier der Sicherheitsbearbeitungsanlage und der aktuellen Position der Funkfernbedienung und somit des Benutzers abgeleitet werden.

Da der Sicherheitsabstand in vielen Fällen in einer horizontalen Ebenen eingehalten werden muss, kann durch die Ableitung des Abstands aus den Wegstrecken ein rein horizontaler Abstand abgeleitet werden und somit die Einhaltung des Sicherheitsabstands in der horizontalen Ebene sichergestellt werden.

Ferner kann das Ableiten des Abstands D sowohl aus der gemessenen Feldstärke als auch aus den berechneten Wegstrecken erfolgen. Dies erhöht die Genauigkeit des abgeleiteten Abstands. Zudem kann eine Plausibilitätsüberprüfung der auf die beiden Arten ermittelten Abstände erfolgen. Dies erhöht die Sicherheit des Verfahrens noch weiter.

Gemäß einem weiteren Aspekt erfolgt in Schritt c) ein Senden des Startsignals von der Funkfernbedienung an die Steuerung auf eine Eingabe mittels einer Eingabevorrichtung der Funkfernbedienung hin.

Der Benutzer kann über die Funkfernbedienung das Startsignal auslösen. Dies bietet verschiedene Möglichkeiten den Sicherheitsbearbeitungsvorgang zu starten. Der Benutzer kann zuerst das Startsignal an der Funkfernbedienung auslösen und sich dann von der Sicherheitsbearbeitungsanlage entfernen, sodass der Sicherheitsbearbeitungsvorgang erst dann gestartet wird, wenn er den vorgegebenen Sicherheitsabstand Dₘᵢₙ erreicht hat. Alternativ kann sich der Benutzer auch erst um den Sicherheitsabstand Dₘᵢₙ oder mehr entfernen und dann das Startsignal über die Fernbedienung absetzen.

Dies bietet eine variablere Gestaltung des Arbeitsablaufs für den Benutzer, ohne dabei dessen Sicherheit zu gefährden, da die Einhaltung des Sicherheitsabstands beim Starten des Sicherheitsbearbeitungsvorgangs immer gewährleistet ist.

Gemäß einem weiteren Aspekt umfasst das Verfahren zumindest einen der folgenden Initialisierungsschritte vor Schritt a):
i1) Aufbauen einer Funkverbindung zwischen dem ersten Funktransceiver der Funkfernbedienung und dem zweiten Funktransceiver der Steuerung.
i2) Eindeutiges Koppeln der Funkfernbedienung und der Steuerung über jeweils der Funkfernbedienung und der Steuerung zugeordnete eindeutige Adressen.

Bevor mit dem Verfahren ein Sicherheitsbearbeitungsvorgang gestartet werden kann, muss die Funkfernbedienung mit der Steuerung verbunden werden.

Zudem oder alternativ kann initial das Koppeln erfolgen. Dabei gleichen die Funkfernbedienung und/oder die Steuerung eine gespeicherte eindeutige Adresse mit der Adresse des jeweils anderen ab. Stimmen die gespeicherte und die Adresse des Kommunikationspartners überein, wird die Verbindung zwischen Funkfernbedienung und Steuerung aufgebaut und aufrechterhalten.

Das eindeutige Koppeln des ersten Funktransceivers und des zweiten Funktransceivers über jeweils dem ersten Funktransceiver und dem zweiten Funktransceiver eindeutig zugeordnete Adressen erhöht die Sicherheit der Sicherheitsbearbeitungsanlage, da es nicht zu falschen Datenübertragungen und somit ungewollten Eingaben oder falschen Abstandsableitungen durch andere Funkgeräte kommen kann.

Gemäß einem weiteren Aspekt werden die jeweils dem ersten Funktransceiver und dem zweiten Funktransceivers eindeutig zugeordnete Adressen entsprechend gegenseitig in einem Einlernvorgang bekanntgemacht.

Der erste Funktransceiver ist ein Bestandteil der Funkfernbedienung. Der zweite Funktransceiver ist ein Bauelement einer Steuerung. Die Steuerung und die Funkfernbedienung werden vor der Benutzung der Sicherheitsbearbeitungsanlage in dem Einlernvorgang miteinander bekannt gemacht. Die Steuerung und/oder die Funkfernbedienung speichern dabei eine entsprechende eindeutige Adresse des anderen ab und kommunizieren fortan nur mit diesem einen Kommunikationspartner. Somit sind die Steuerung und die Funkfernbedienung eindeutig miteinander gekoppelt. Dabei kann die Kopplung der gleichen Steuerung mit der gleichen Funkfernbedienung immer wieder ohne erneuten Einlernvorgang erfolgen.

Durch den Einlernvorgang gibt es immer nur eine gültige Paarung von Funkfernbedienung und Steuerung. dies erhöht die Sicherheit des Verfahrens, da keine Verbindung zwischen einer unbekannten Funkfernbedienung und einer Steuerung aufgebaut werden kann.

Gemäß einem weiteren Aspekt umfasst das Verfahren ferner zumindest einen der folgenden Schritte:
d) Ableiten eines Vorliegens eines Sturzes basierend auf den Beschleunigungswerten des Beschleunigungsmessers oder auf Winkelbeschleunigungswerten eines Winkelbeschleunigungsmessers, der an der Funkfernbedienung angeordnet ist, wobei in Schritt b) das Ableiten des Freigabesignals zusätzlich auf dem Vorliegen eines Sturzes basiert;
e) Übermitteln des Abstands D an die Funkfernbedienung und Darstellen des Abstands D auf einer grafischen Anzeige der Funkfernbedienung;
f) Übermitteln eines Fortschrittswerts des Sicherheitsbearbeitungsvorgangs an die Funkfernbedienung und Darstellen des Fortschrittswerts auf der grafischen Anzeige der Funkfernbedienung;
g) kontinuierliches Aufzeichnen und Überprüfen eines Bewegungsablaufs der Funkfernbedienung.

Der Winkelbeschleunigungsmesser kann Winkelbeschleunigungssensoren für drei Drehungen umfassen, die senkrecht zueinander stehen, um Winkelbeschleunigungswerte in den drei senkrechten Drehrichtungen zu ermitteln. Durch Überwachen der Beschleunigungswerte und/oder der Winkelbeschleunigungswerte kann ein Sturz erkannt werden, da dabei besonders hohe Beschleunigungswerte und Winkelbeschleunigungswerte vorliegen. Basierend auf der Erkennung eines Sturzes kann die Auslösung des Sicherheitsbearbeitungsvorgangs verhindert werden. Dazu wird bei der Ableitung des Freigabesignals mitberücksichtigt, ob ein Sturz vorliegt. Falls dem so ist, wird der Sicherheitsbearbeitungsvorgang auch wenn der Sicherheitsabstand eingehalten wurde nicht gestartet bzw. kein Freigabesignal erzeugt.

Durch die Sturzüberwachung wird die Sicherheit bei der Benutzung der Sicherheitsbearbeitungsanlage weiter gesteigert, da über die Bereitschaft des Benutzers indirekt mitüberwacht wird.

Der momentane Abstand D kann von der Anstandsüberwachung direkt oder über die Steuerung an die Funkfernbedienung übertragen und beispielsweise über ein grafisches Display dem Benutzer angezeigt werden.

Durch die Bereitstellung des momentanen Abstands kann der Benutzer noch schneller den Sicherheitsbearbeitungsvorgang auslösen, da er mit einem Blick sieht, wann er den benötigten Sicherheitsabstand erreicht hat.

Aus dem Sensorwert eines Druck-/Kraftsensors und/oder Positionssensors der Sicherheitsbearbeitungsanlage kann ein Fortschrittswert zu dem Sicherheitsbearbeitungsvorgang abgeleitet und an die Funkfernbedienung übertragen werden. An der Funkfernbedienung wird der Fortschrittswert, beispielsweise über einen Fortschrittsbalken auf dem grafischen Display der Anzeigeeinrichtung, dargestellt.

Das Darstellen des Fortschrittswerts des Sicherheitsbearbeitungsvorgangs, führt zu einem erhöhten Komfort und einer erhöhten Sicherheit für den Benutzer, da er live mitverfolgen kann wie der Sicherheitsbearbeitungsvorgang verläuft und wann dieser endgültig abgeschlossen ist und gefahrlos der Sicherheitsabstand wieder unterschritten werden kann.

Der Abstand D kann fortlaufend aufgezeichnet und abgespeichert werden, sodass der Bewegungsablauf der Funkfernbedienung und somit des Benutzers überprüft werden kann.

Dies kann bei der Diagnose von Fehlern oder bei der Rekonstruktion von Unfällen hilfreich sein.

Durch die Beschränkung der Gültigkeit des Freigabesignals wird beispielsweise ein ungewolltes erneutes Starten eines Sicherheitsbearbeitungsvorgangs vermieden.

Gemäß einem weiteren Aspekt umfasst das Verfahren ferner zumindest einen der folgenden Überprüfungsschritte:
p1) kontinuierliches Überprüfen eines flüchtigen Speichers der Steuerung, bevorzugt mittels Prüfsummenverfahren;
p2) kontinuierliches Überprüfen eines nicht-flüchtigen Speichers der Steuerung, bevorzugt mittels Prüfsummenverfahren;
p3) kontinuierliches Überprüfen einer Betriebsspannung und eines Prozessors der Steuerung, bevorzugt mittels eines Watchdog;
p4) kontinuierliches Überprüfen einer integrierten Schaltung der Steuerung, bevorzugt mittels Plausibilitätsüberprüfungsverfahren.

Durch die Integration von automatischen Systemprüfungsmechanismen wird die Sicherheit des Verfahrens zusätzlich erhöht. Vorzugsweise umfasst die Plausibilitätsüberprüfung auch die Bedieneingabesignale.

Die Erfindung sowie das technische Umfeld werden nachfolgend anhand der Figuren beispielhaft näher erläutert. Es ist darauf hinzuweisen, dass die Figuren besonders bevorzugte Ausführungsvariante der Erfindung zeigen, diese jedoch nicht darauf beschränkt ist. Es zeigen:
- Fig. 1: eine schematische Darstellung einer Vorrichtung zum entfernten Bedienen einer Sicherheitsbearbeitungsanlage;
- Fig. 2: eine schematische Darstellung einer Funkfernbedienung der Vorrichtung aus Fig. 1;
- Fig. 3: eine schematische Darstellung eines Verfahrens zum entfernten Bedienen einer Sicherheitsbearbeitungsanlage;
- Fig. 4: ein beispielhaftes Ablaufdiagramm des Verfahrens aus Fig. 3;
- Fig. 5: eine schematische Darstellung einer Sicherheitsschneidanlage.

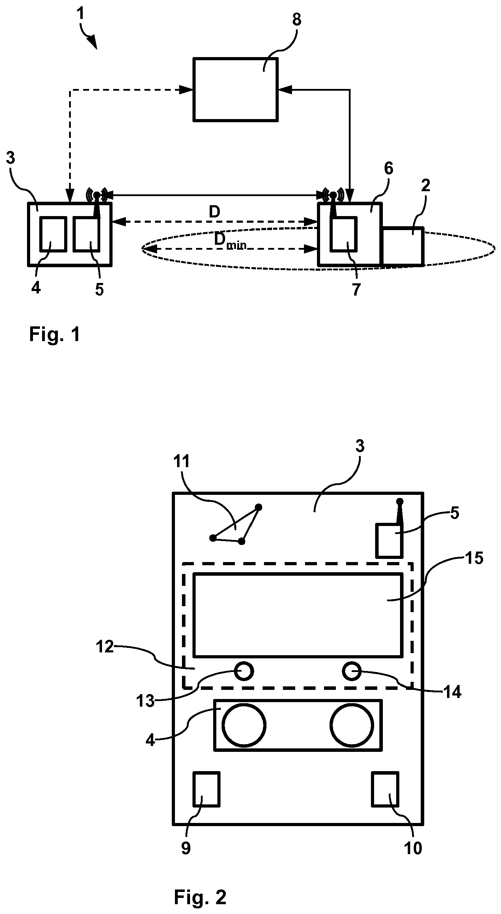

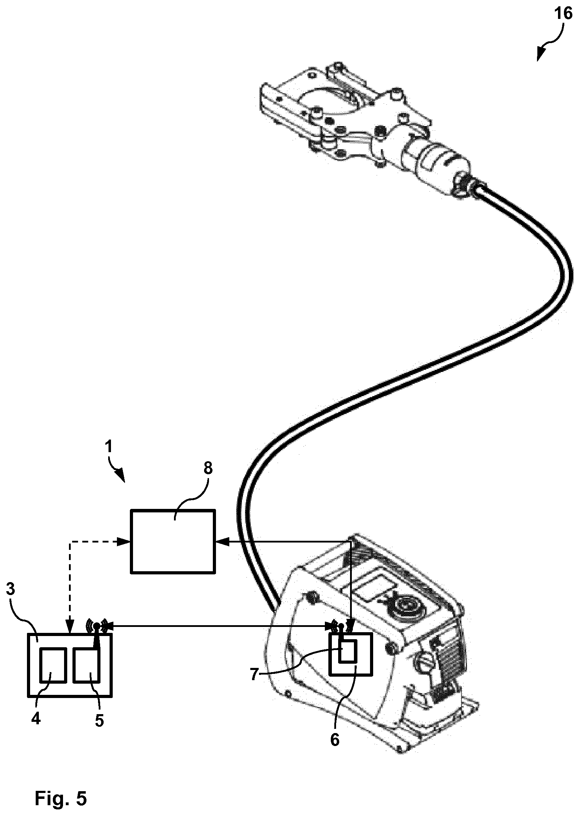

Fig. 1 zeigt schematisch eine Vorrichtung 1 zum entfernten Bedienen einer Sicherheitsbearbeitungsanlage 2, insbesondere einer Sicherheitsschneidanlage (siehe Fig. 5) oder einer Sicherheitsverpressanlage.

Eine Funkfernbedienung 3 der Vorrichtung 1 umfasst eine Eingabeeinrichtung 4 und einen ersten Funktransceiver 5. Eine Steuerung 6 der Vorrichtung 1 umfasst einen zweiten Funktransceiver 7. Die Steuerung 6 ist an der Sicherheitsbearbeitungsanlage 2 angeordnet und über einen Adapter (nicht dargestellt) mit dieser verbunden. Der erste Funktransceiver 5 und der zweite Funktransceiver 7 sind kommunikativ verbunden. Eine Abstandsüberwachung 8 ist in der Steuerung 6 integriert und mit dieser Kommunikativ verbunden. Alternativ könnte die Abstandsüberwachung 8 auch in der Funkfernbedienung 3 integriert und mit dieser kommunikativ verbunden sein (gestrichelter Pfeil).

Die Abstandsüberwachung 8 ermittelt kontinuierlich einen Abstand D zwischen der Funkfernbedienung 3 und der Steuerung 6. Dazu wird zum einen die Feldstärke P bzw. die Amplitude von Funksignalen, die von der Funkfernbedienung 3 an die Steuerung 6 gesendet werden analysiert und daraus zusammen mit einer bekannten Sendeleistung der Funkfernbedienung 3 ein erster Abstand D₁ ermittelt. Zum anderen werden Wegstrecken in eine horizontale x- Richtung und eine dazu senkrechte horizontale y-Richtung aus der Funkfernbedienung durch zeitliche Summation bzw. Integration berechnet und aus den Wegstrecken ebenfalls der Abstand D₂ in der horizontalen x-y-Ebene ermittelt. Die beiden Abstände D₁ und D₂ werden zu einem Abstand D kombiniert. Es kann auch eine direkte Ableitung des Abstands D aus den gemessenen Feldstärken und den berechneten Wegstrecken erfolgen. Sobald der Abstand D größer oder gleich einem vorgegebenen Sicherheitsabstand Dₘᵢₙ ist, wird von der Steuerung 6 ein Freigabesignal erzeugt. Der Benutzer kann über die Eingabeeinrichtung 4 ein Startsignal auslösen. Sobald das Freigabesignal und das Startsignal vorliegen, wird der Sicherheitsbearbeitungsvorgang von der Steuerung 6 gestartet. Die Steuerung 6 ist signaltechnisch mit der Anlagensteuerung der Sicherheitsbearbeitungsanlage 2 verbunden. Liegen Freigabesignal und Startsignal der Steuerung 6 vor, so generiert diese ein Signal an die Anlagensteuerung, sodass die Anlagensteuerung einen sicherheitsrelevanten Vorgang der Sicherheitsbearbeitungsanlage auslösen kann.

Fig. 2 zeigt die Funkfernbedienung 3 mit der Eingabevorrichtung 4 und dem ersten Funktransceiver 5. Ferner umfasst die Funkfernbedienung 3 einen Beschleunigungsmesser 9 und einen Winkelbeschleunigungsmesser 10. Der Beschleunigungssensor und/der Winkelbeschleunigungssensor ist bzw. sind vorzugsweis ein Teil einer inertialen Messeinheit. Zusätzlich kann auch eine Kompasseinrichtung vorgesehen sein.

Der Beschleunigungsmesser umfasst drei Beschleunigungssensoren, von denen je einer in die x-Richtung, in die y-Richtung und in eine dazu senkrechte z-Richtung die Beschleunigung misst. Aus den Beschleunigungswerten in die drei Richtungen werden die Wegstrecken in die x-Richtung und in die y-Richtung berechnet. In ähnlicher Weise umfasst der Winkelbeschleunigungsmesser 10 drei Winkelbeschleunigungssensoren, von denen je einer die Winkelbeschleunigung um die x-Richtung, um die y-richtung und um die z-Richtung misst. Mithilfe der Beschleunigungswerte und der Winkelbeschleunigungswerte, kann der Abstand D2 in der x-y-Ebene auch dann mit hoher Präzision bestimmt werden, wenn die Funkfernbedienung 3 nicht lagestabil gehalten wird, sondern bei der Bewegung von der Sicherheitsbearbeitungsanlage weg verkippt bzw. hin und her gekippt wird. Aus den Beschleunigungswerten und den Winkelbeschleunigungswerten kann durch eine Sturzüberwachung (nicht explizit dargestellt) auch ein Sturz abgeleitet werden. Sollte ein Sturz von der Sturzüberwachung erkannt worden sein, wird der Sicherheitsbearbeitungsvorgang nicht ausgelöst, bzw. das Freigabesignal nicht erzeugt, auch wenn der Sicherheitsabstand Dₘᵢₙ erreicht ist.

Es kann optional auch eine Abstandsmessung über ein optisches Verfahren erfolgen, wobei an der Funkfernsteuerung 3 ein Marker 11 angebracht ist. An der Steuerung 6 ist dazu ebenfalls ein Marker angebracht (nicht dargestellt). Über eine optische 3D-Kamera (z. B. im Infrarotbereich) kann die Position der Funkfernbedienung 3 relativ zu der Steuerung 6 ermittelt und daraus ein Abstand D₃ bestimmt werden.

Eine Anzeigeeinrichtung 12 der Funkfernbedienung 3 besteht aus einer Status-LED 13, einer Aktivitäts-LED 14 und einem graphischen Display 15. Die Status-LED 13 zeigt den momentanen Zustand der Sicherheitsbearbeitungsanlage 2 an. Die Aktivitäts-LED 14 zeigt an, ob die Funkfernbedienung 3 mit der Steuerung 6 verbunden ist. Das grafische Display 15 kann den Abstand D und/oder einen Fortschritt des Sicherheitsbearbeitungsvorgangs anzeigen.

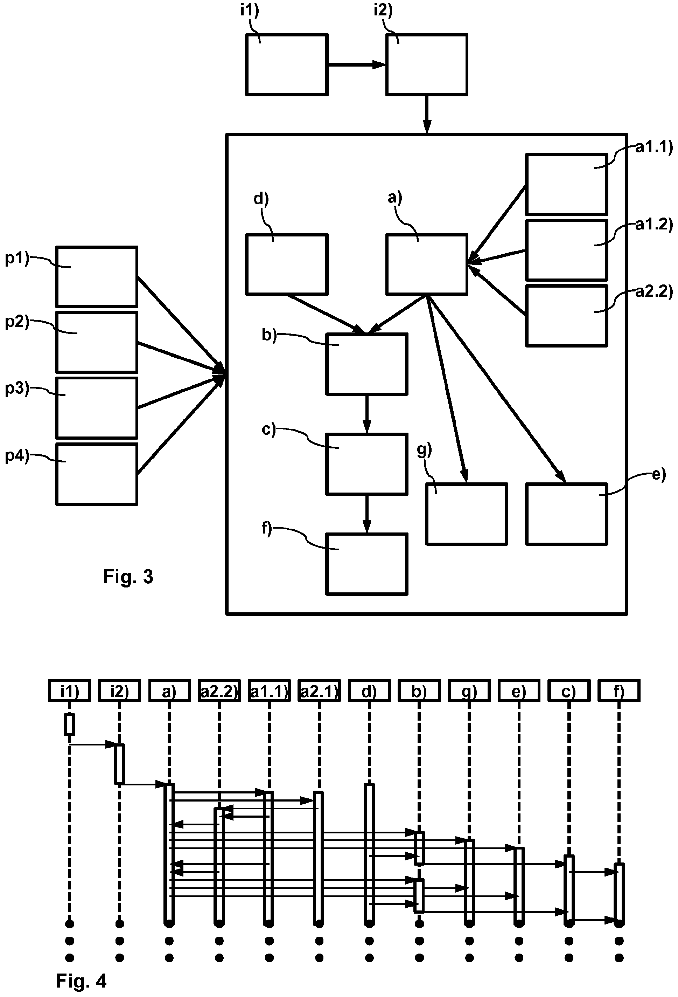

Fig. 3 zeigt schematisch ein Verfahren zum entfernten Bedienen einer Sicherheitsbearbeitungsanlage 2 gemäß Fig. 1, insbesondere einer Sicherheitsschneidanlage oder einer Sicherheitsverpressanlage. In einem Initialisierungsschritt i1) erfolgt ein Aufbauen einer Funkverbindung zwischen dem ersten Funktransceiver 5 der Funkfernbedienung 3 und dem zweiten Funktransceiver 7 der Steuerung 6. Dabei werden Daten per Funk übermittelt, wobei die Kommunikation nach einem standardisierten Protokoll (z. B. Bluetooth, WLAN/WiFi, ZigBee, usw.) ablaufen kann. Sobald die Funkverbindung aufgebaut ist, erfolgt in einem Initialisierungsschritt i2) ein eindeutiges Koppeln der Funkfernbedienung 3 und der Steuerung 6 bzw. des ersten Funktransceivers 5 und des zweiten Funktransceivers 7. Dazu senden die Funkfernbedienung 3 und/oder die Steuerung 6 ihre eindeutigen Adressen an den jeweils anderen. Die Funkfernbedienung 3 und/oder die Steuerung 6 vergleichen die gesendete Adresse des Kommunikationspartners mit jeweils einer gespeicherten Adresse, die in einem Einlernvorgang abgespeichert wurde. Stimmen die gesendete und die gespeicherte Adresse überein, wird der Kommunikationspartner akzeptiert und die Funkfernbedienung 3 und die Steuerung 6 sind eindeutig miteinander gekoppelt.

In einem Schritt a) erfolgt ein Ermitteln eines Abstands D zwischen der Funkfernbedienung 3 und der Steuerung 6. Dazu werden in einem Schritt a1.1) Feldstärken P von Funksignalen zwischen dem ersten Funktransceiver 5 und dem zweiten Funktransceiver 6 gemessen. in einem Schritt a2.1) werden Wegstrecken der Funkfernbedienung 3 basierend auf Beschleunigungswerten aus der Beschleunigungsmesser 9 berechnet. Anschließend erfolgt in einem Schritt a2.2) ein Ableiten des Abstands D aus den gemessenen Feldstärken P über die Beziehung P ~ 1/D³ und den berechneten Wegstrecken durch zeitliche Integration der Beschleunigungswerte in der x-y-Ebene. In einem Schritt d) erfolgt ein Ableiten eines Vorliegens eines Sturzes basierend auf den Beschleunigungswerten des Beschleunigungsmessers 9 oder auf Winkelbeschleunigungswerten des Winkelbeschleunigungsmessers 10. Anschließend wird in Schritt b) das Freigabesignal für einen Sicherheitsbearbeitungsvorgang aus dem ermittelten Abstand D und dem vorbestimmten Sicherheitsabstand Dₘᵢₙ abgeleitet, wobei das Ableiten des Freigabesignals zusätzlich auf dem Vorliegen des Sturzes basiert, sodass wenn ein Sturz erkannt wurde, der Sicherheitsbearbeitungsvorgang nicht gestartet bzw. das Freigabesignal nicht erzeugt wird. In Schritt c) wird schließlich der Sicherheitsbearbeitungsvorgang basierend auf einem Anliegen eines benutzerinduzierten Startsignals und des Freigabesignals an der Steuerung 6 gestartet, wobei das Startsignal von der Funkfernbedienung 3 an die Steuerung 6 auf eine Eingabe mittels der Eingabeeinrichtung 4 hin gesendet wird. Das Freigabesignal ist dabei jeweils nur für einen einzigen Sicherheitsbearbeitungsvorgang gültig. Zusätzlich wird in einem Schritt f) ein Fortschrittswert des Sicherheitsbearbeitungsvorgangs, der aus Sensorwerten eines Positionssensors und/oder eines Drucksensors ermittelt wird, an die Funkfernbedienung 3 gesendet und auf dem grafischen Display 15 dargestellt.

Weiterhin erfolgt in einem Schritt e) ein Übermitteln des Abstands D an die Funkfernbedienung 3, wobei der Abstand D auf dem grafischen Display 15 angezeigt wird. Zudem wird in einem Schritt g) kontinuierlich ein Bewegungsablauf der Funkfernbedienung basierend auf den Wegstrecken aufgezeichnet und überprüft.

Durch verschiedene Überprüfungsschritte wird die Vorrichtung 1, auf der das Verfahren ausgeführt wird, kontinuierlich auf ihre Funktionsbereitschaft hin überprüft. Diese Überprüfungen sind optional, tragen jedoch zu einer erhöhten Sicherheit für den Benutzer bei. Dazu erfolgt in einem Überprüfungsschritt p1) ein kontinuierliches Überprüfen eines flüchtigen Speichers der Steuerung 6, bevorzugt mittels Prüfsummenverfahren. Weiterhin wird in einem Überprüfungsschritt p2) kontinuierlich ein nicht-flüchtiger Speicher der Steuerung 6, bevorzugt mittels Prüfsummenverfahren, überprüft. Ferner erfolgt in einem Überprüfungsschritt p3) ein kontinuierliches Überprüfen einer Betriebsspannung und eines Prozessors der Steuerung 6, bevorzugt mittels eines Watchdog. Zudem wird in einem Überprüfungsschritt p4) kontinuierlich eine integrierte Schaltung der Steuerung 6, bevorzugt mittels Plausibilitätsüberprüfungsverfahren, überprüft.

Fig. 4 zeigt schematisch eine mögliche zeitliche Abfolge der einzelnen Schritte des Verfahrens aus Fig. 3. Nach dem initialen Aufbau der Funkverbindung zwischen Steuerung 6 und Funkfernbedienung 3 in Initialisierungsschritt i1) und der eindeutigen Kopplung in Initialisierungsschritt i2) wird in Schritt a) kontinuierlich der Abstand D zwischen der Funkfernbedienung 3 und der Steuerung 6 ermittelt. Dazu wird in Schritt a1.1) die Feldstärke P und in Schritt a2.1) die Wegstrecken in der x-y-Ebene aus den Beschleunigungswerten des Beschleunigungsmessers 9 ermittelt. in Schritt a2.2) wird anschließend aus der Feldstärke P und den Wegstrecken der Abstand D abgeleitet. Parallel zu Schritt a) erfolgt in Schritt d) die Ermittlung eines Sturzes über die Beschleunigungswerte und die Winkelbeschleunigungswerte des Winkelbeschleunigungsmessers 10. In Schritt b) wird dann basierend auf dem Abstand D und dem vorgegebenen Sicherheitsabstand Dₘᵢₙ das Freigabesignal unter Berücksichtigung des Vorliegens eines Sturzes abgeleitet. Weiterhin wird in Schritt g) kontinuierlich der Bewegungsablauf der Funkfernbedienung 3 aufgezeichnet und überprüft. Ferner wird in Schritt e) kontinuierlich der Abstand D an die Funkfernbedienung 3 übermittelt, sodass der Abstand D über das grafische Display 15 der Anzeigeeinrichtung 12 dem Benutzer angezeigt werden kann. In Schritt c) wird der Sicherheitsbearbeitungsvorgang gestartet, sobald das Freigabesignal und das Startsignal, das durch den Benutzer über die Eingabeeinrichtung 4 der Funkfernbedienung 3 gegeben wird, an der Steuerung 6 anliegen. In Schritt f) wird kontinuierlich der Fortschritt des Sicherheitsbearbeitungsvorgangs basierend auf dem Sensorwert der Sicherheitsbearbeitungsanlage 2 dem Benutzer mittels des grafischen Displays 15 der Anzeigeeinrichtung 12 angezeigt.

Die in Fig. 4 nicht dargestellten Überprüfungsschritte p1) bis p4) können direkt nach den Einschalten der Steuerung 6 bzw. der Funkfernbedienung 3 und/oder nach den Initialisierungsschritten i1) und i2) und/oder zu vorbestimmten Zeitpunkten während des Betriebs durchgeführt werden.

Fig. 5 zeigt schematisch eine Sicherheitsschneidanlage 16 mit einer Vorrichtung zum entfernten Bedienen 1. Die Sicherheitsschneidanlage 16 umfasst eine öldynamischen Pumpe 17 mit integrierter Anlagensteuerung, einen Schneidkopf 18 mit Zylinder und Arbeitskolben und einen elastischen Isolierschlauch 19 der die Pumpe 17 und den Schneidkopf 18 verbindet. An die Pumpe 17 ist die Steuerung 6 der Vorrichtung 1 über einen nicht dargestellten Adapter gekoppelt und kommunikativ mit der Anlagensteuerung verbunden. Ein Sicherheitsschneidvorgang kann von einem Benutzer ausgelöst werden, indem er ein Startsignal über die Eingabeeinrichtung 4 der Funkfernbedienung 3 auslöst, das über einen ersten Funktransceiver 5 der Funkfernbedienung 3 an einen zweiten Funktransceiver 7 der Steuerung 6 gesendet wird, und gleichzeitig mit der Funkfernbedienung 3 bei sich einen Abstand D zu der Sicherheitsschneidanlage 16 einnimmt der größer oder gleich dem vorgegebenen Sicherheitsabstand Dₘᵢₙ ist, sodass an der Steuerung 6 ein Freigabesignal (wie zuvor beschreiben abgeleitet) neben dem Startsignal anliegt.

### Bezugszeichenliste

- 1: Vorrichtung zum entfernten Bedienen
- 2: Sicherheitsbearbeitungsanlage
- 3: Funkfernbedienung
- 4: Eingabeeinrichtung
- 5: erster Funktransceiver
- 6: Steuerung
- 7: zweiter Funktransceiver
- 8: Abstandsüberwachung
- 9: Beschleunigungsmesser
- 10: Winkelbeschleunigungsmesser
- 11: Marker
- 12: Anzeigeeinrichtung
- 13: Status-LED
- 14: Aktivitäts-LED
- 15: graphisches Display
- 16: Sicherheitsschneidanlage
- 17: öldynamische Pumpe
- 18: Schneidkopf
- 19: elastischer Isolierschlauch

## Patentansprüche

1. Stationäre Sicherheitsschneidanlage (16), welche zum Schneiden eines Kabels geeignet und bestimmt ist, umfassend einer Vorrichtung (1) zum entfernten Bedienen der Sicherheitsschneidanlage (16) umfassend:
- eine Funkfernbedienung (3), die einen ersten Funktransceiver (5) aufweist;
- eine Steuerung (6), die einen zweiten Funktransceiver (7) aufweist, wobei die Steuerung (6) an der Sicherheitsschneidanlage (16) angeordnet ist; und
- eine Abstandsüberwachung (8), die zu einem Ermitteln eines Abstands D zwischen der Funkfernbedienung (3) und der Steuerung (6) eingerichtet ist,
wobei der erste Funktransceiver (5) und der zweite Funktransceiver (7) miteinander kommunikativ verbindbar sind und zu einem gegenseitigen Datenaustausch über Funksignale in einem verbundenen Zustand eingerichtet sind,
wobei die Abstandsüberwachung (8) und zumindest die Funkfernbedienung (3) oder die Steuerung (6) kommunikativ verbunden sind und zu einem Übertragen des Abstands D oder eines dem Abstand D entsprechenden Signals von der Abstandsüberwachung (8) entsprechend an zumindest die Funkfernbedienung (3) oder die Steuerung (6) eingerichtet sind und
wobei die Steuerung (6) oder die Funkfernbedienung (3) zu einem Ableiten eines Freigabesignals für einen Sicherheitsbearbeitungsvorgang aus dem entsprechend von der Funkfernbedienung (3) oder der Abstandsüberwachung (8) an die Steuerung (6) bzw. die Funkfernbedienung (3) übertragenen Abstand D oder eines dem Abstand D entsprechenden Signals und einem vorbestimmten Sicherheitsabstand Dₘᵢₙ sowie entsprechend zu einem übertragen des Freigabesignals an die Steuerung (6) eingerichtet ist,
wobei die Steuerung zu einem Starten des Sicherheitsbearbeitungsvorgangs basierend auf einem Anliegen eines benutzerinduzierten Startsignals und des Freigabesignals an der Steuerung (6) eingerichtet ist.

2. Anlage (16) gemäß Anspruch 1, wobei die Abstandsüberwachung (8) eingerichtet ist zu:
- einem Messen von Feldstärken der Funksignale zwischen dem ersten Funktransceiver (5) und dem zweiten Funktransceiver (7) und
- einem Ableiten des Abstands D aus den gemessenen Feldstärken.

3. Anlage (16) gemäß einem der vorherigen Ansprüche, wobei die Abstandsüberwachung (8) eingerichtet ist zu:
- einem Berechnen von Wegstrecken der Funkfernbedienung (3) basierend auf Beschleunigungswerten eines Beschleunigungsmessers (9), der an der Funkfernbedienung (3) angeordnet ist und
- einem Ableiten des Abstands D den berechneten Wegstrecken oder aus den gemessenen Feldstärken und den berechneten Wegstrecken.

4. Anlage (16) gemäß einem der vorherigen Ansprüche, wobei die Funkfernbedienung (3) eine Eingabeeinrichtung (4) aufweist, die mit dem ersten Funktransceiver (5) kommunikativ verbunden ist, und zu einem Senden des Startsignals über den ersten Funktransceiver (5) auf eine Eingabe mittels der Eingabevorrichtung (4) hin eingerichtet ist und wobei die Steuerung (6) zu einem Empfangen des Startsignals über den zweiten Funktransceiver (7) eingerichtet ist.

5. Anlage (16) gemäß einem der vorherigen Ansprüche, wobei die Funkfernbedienung (3) und Steuerung (6) jeweils eine eindeutige Adresse aufweisen und mittels der eindeutigen Adressen eindeutig miteinander koppelbar sind.

6. Anlage (16) gemäß einem der vorherigen Ansprüche, umfassend eine Sturzüberwachung, die zu einem Ermitteln eines Vorliegens eines Sturzes eingerichtet ist,
wobei die Sturzüberwachung zu einem Ableiten des Vorliegens eines Sturzes basierend auf den Beschleunigungswerten des Beschleunigungsmessers oder auf Winkelbeschleunigungswerten eines Winkelbeschleunigungsmessers (10), der an der Funkfernbedienung (3) angeordnet ist, eingerichtet ist, und
wobei die Steuerung (6) oder die Funkfernbedienung (3) zum Ableiten des Freigabesignals zusätzlich unter Berücksichtigung des Vorliegens eines Sturzes eingerichtet ist.

7. Anlage (16) gemäß einem der vorherigen Ansprüche, wobei die Steuerung (6) mit zumindest einem Sensor der Sicherheitsbearbeitungsanlage (2) verbunden ist und zu einem Auslesen eines Fortschrittswerts des Sicherheitsbearbeitungsvorgangs eingerichtet ist,
wobei die Steuerung (6) und die Funkfernbedienung (3) zu einem übertragen des Fortschrittswerts von der Steuerung (6) an die Funkfernbedienung (3) eingerichtet sind, und
wobei die Funkfernbedienung (3) zu einem Anzeigen des Fortschrittswerts durch eine Anzeigeeinrichtung (12) eingerichtet ist.

8. Anlage (16) nach wenigstens einem der vorherigen Ansprüche, wobei wenigstens eine räumliche Bewegungseinheit vorgesehen ist, vermittels derer eine Abstandsüberwachung und/oder Sturzüberwachung erfolgt.

9. Anlage (16) nach Anspruch 8, wobei die räumliche Bewegungseinheit durch eine inertiale Messeinheit gebildet ist.

10. Anlage (16) nach Anspruch 9, wobei die inertiale Messeinheit eine räumliche Kombination mehrerer Inertialsensoren, vorzugsweise Beschleunigungssensoren, Rotationsmesser, Rotationsfühler, Drehmomentgeber, Gyroskopen, aufweist.

11. Verfahren zum entfernten Bedienen einer stationären Sicherheitsschneidanlage (16) oder einer Sicherheitsverpressanlage, umfassend die folgenden Schritte:
positionieren der Sicherheitsschneidanlage (2);
a) Ermitteln eines Abstands D zwischen einem ersten Funktransceiver (5) einer Funkfernbedienung (3) und einem zweiten Funktransceiver (7), der einem sicherheitsrelevanten Bereich der Sicherheitsbearbeitungsanlage (2) zugeordnet ist;
b) Ableiten eines Freigabesignals für einen Sicherheitsbearbeitungsvorgang aus dem ermittelten Abstand D und einem vorbestimmten Sicherheitsabstand Dₘᵢₙ;
c) Starten des Sicherheitsbearbeitungsvorgangs basierend auf einem Anliegen eines benutzerinduzierten Startsignals und des Freigabesignals an einer Steuerung (6).

12. Verfahren gemäß Anspruch 11, wobei das Ermitteln des Abstands D die folgenden Schritte umfasst:
a1.1) Messen von Feldstärken von Funksignalen zwischen dem ersten Funktransceiver (5) der Funkfernbedienung (3) und dem zweiten Funktransceiver (7) und
a1.2) Ableiten des Abstands D aus den gemessenen Feldstärken.

13. Verfahren gemäß einem der Ansprüche 11 oder 12, wobei das Ermitteln des Abstands D die folgenden Schritte umfasst:
a2.1) Berechnen von Wegstrecken der Funkfernbedienung (3) basierend auf Beschleunigungswerten aus einem Beschleunigungsmesser (9) und/oder einer inertialen Messeinheit, der an der Funkfernbedienung (3) angeordnet ist, und
a2.2) Ableiten des Abstands D aus den berechneten Wegstrecken oder aus den gemessenen Feldstärken und den berechneten Wegstrecken.

14. Verfahren gemäß einem der Ansprüche 11, 12 oder 13, wobei in Schritt c) ein Senden des Startsignals von der Funkfernbedienung (3) an eine Steuerung (6) der Sicherheitsbearbeitungsanlage (2) auf eine Eingabe mittels einer Eingabevorrichtung (4) der Funkfernbedienung (3) hin erfolgt.

15. Verfahren gemäß einem der Ansprüche 11 bis 14, ferner umfassend zumindest einen der folgenden Initialisierungsschritte vor Schritt a):
i1) Aufbauen einer Funkverbindung zwischen dem ersten Funktransceiver (5) der Funkfernbedienung (3) und dem zweiten Funktransceiver (7) sowie
i2) eindeutiges Koppeln des ersten Funktransceivers (5) und des zweiten Funktransceivers (7) über jeweils dem ersten Funktransceiver (5) und dem zweiten Funktransceiver (7) eindeutig zugeordnete Adressen.

16. Verfahren gemäß Anspruch 15, wobei die jeweils dem ersten Funktransceiver (5) und dem zweiten Funktransceiver (7) zugeordnete eindeutige Adressen entsprechend gegenseitig in einem Einlernvorgang bekanntgemacht werden.

17. Verfahren gemäß einem der Ansprüche 11 bis 16, ferner umfassend zumindest einen der folgenden Schritte:
d) Ableiten eines Vorliegens eines Sturzes basierend auf den Beschleunigungswerten des Beschleunigungsmessers (9) oder auf Winkelbeschleunigungswerten eines Winkelbeschleunigungsmessers (10), der an der Funkfernbedienung (3) angeordnet ist, wobei in Schritt b) das Ableiten des Freigabesignals zusätzlich auf dem Vorliegen eines Sturzes basiert;
e) Übermitteln des Abstands D an die Funkfernbedienung (6) und Darstellen des Abstands D auf einer grafischen Anzeige (15) der Funkfernbedienung (3);
f) Übermitteln eines Fortschrittswerts des Sicherheitsbearbeitungsvorgangs an die Funkfernbedienung (3) und Darstellen des Fortschrittswerts auf der grafischen Anzeige (15) der Funkfernbedienung (3);
g) kontinuierliches Aufzeichnen und Überprüfen eines Bewegungsablaufs der Funkfernbedienung (3).

18. Verfahren gemäß einem der Ansprüche 11 bis 17, ferner umfassend zumindest einen der folgenden Überprüfungsschritte:
p1) kontinuierliches Überprüfen eines flüchtigen Speichers einer Steuerung (6), bevorzugt mittels Prüfsummenverfahren;
p2) kontinuierliches Überprüfen eines nicht-flüchtigen Speichers einer Steuerung (6), bevorzugt mittels Prüfsummenverfahren;
p3) kontinuierliches Überprüfen einer Betriebsspannung und eines Prozessors einer Steuerung (6), bevorzugt mittels eines Watchdog;
p4) kontinuierliches Überprüfen einer integrierten Schaltung einer Steuerung (6), bevorzugt mittels Plausibilitätsüberprüfungsverfahren.

## Claims

1. A stationary safety cutting system (16) suitable and intended for cutting a cable, comprising
a device (1) for remotely operating the safety cutting machine (16), comprising:
- a radio remote control (3) comprising a first radio transceiver (5); - a control unit (6) comprising a second radio transceiver (7), the control unit (6) being mounted on the safety cutting machine (16);
and
- a distance monitoring system (8) configured to determine a distance D between the radio remote control (3) and the control unit (6),
wherein the first radio transceiver (5) and the second radio transceiver (7) can be connected to each other for communication purposes and are configured to exchange data via radio signals whilst in a connected state,
wherein the distance monitoring system (8) and at least the radio remote control (3) or the control unit (6) are communicatively connected and are configured to transmit the distance D or a signal corresponding to the distance D from the distance monitoring system (8) to at least the radio remote control (3) or the control unit (6) as appropriate, and
whereby the control unit (6) or the radio remote control (3) derives an enable signal for a safety machining operation from the distance D - transmitted to the control unit (6) or the radio remote control (3) by the radio remote control (3) or the distance monitoring system (8) to the control unit (6) or the radio remote control (3), respectively, and a predetermined safety distance Dₘᵢₙ, and is configured accordingly to transmit the enable signal to the control unit (6),
wherein the control unit is configured to start the safety machining operation based on the receipt of a user-initiated start signal and the enable signal at the control unit (6).

2. A system (16) as per claim 1, wherein the distance monitoring system (8) is configured to:
- measuring the field strengths of the radio signals between the first radio transceiver (5) and the second radio transceiver (7), and
- derive the distance D from the measured field strengths.

3. A system (16) according to one of the preceding claims, wherein the distance monitoring unit (8) is configured to:
- calculating the distances travelled by the radio remote control (3) based on acceleration values from an accelerometer (9) mounted on the radio remote control (3), and
- derive the distance D from the calculated distances or from the measured field strengths and the calculated distances.

4. A system (16) according to one of the preceding claims, wherein the radio remote control (3) comprises an input device (4) which is communicatively connected to the first radio transceiver (5) and is configured to transmit the start signal via the first radio transceiver (5) in response to an input via the input device (4), and wherein the controller (6) is configured to receive the start signal via the second radio transceiver (7).

5. A system (16) according to one of the preceding claims, wherein the radio remote control (3) and the controller (6) each have a unique address and can be unambiguously paired with one another by means of the unique addresses.

6. A system (16) according to one of the preceding claims, comprising a fall detection system configured to determine whether a fall has occurred,
wherein the fall detection system is configured to determine the occurrence of a fall based on the acceleration values from the accelerometer or on angular acceleration values from an angular accelerometer (10) arranged on the radio remote control (3), and
wherein the controller (6) or the remote control (3) is further configured to derive the enable signal whilst taking into account the occurrence of a fall.

7. A system (16) according to one of the preceding claims, wherein the controller (6) is connected to at least one sensor of the safety processing system (2) and is configured to read out a progress value of the safety processing operation,
wherein the control unit (6) and the radio remote control (3) are configured to transmit the progress value from the control unit (6) to the radio remote control (3), and
wherein the radio remote control (3) is configured to display the progress value via a display device (12).

8. A system (16) according to at least one of the preceding claims, wherein at least one spatial movement unit is provided, by means of which distance monitoring and/or fall monitoring is carried out.

9. A system (16) according to claim 8, wherein the spatial motion unit is formed by an inertial measurement unit.

10. A system (16) according to claim 9, wherein the inertial measurement unit comprises a spatial combination of a plurality of inertial sensors, preferably accelerometers, rotation meters, rotation sensors, torque transducers and gyroscopes.

11. A method for the remote operation of a stationary safety cutting system (16) or a safety pressing system, comprising the following steps:
positioning the safety cutting system (2);
a) determining a distance D between a first radio transceiver (5) of a radio remote control (3) and a second radio transceiver (7) associated with a safety-relevant area of the safety processing system (2);
b) Deriving an enable signal for a safety machining operation from the determined distance D and a predetermined safety distance Dₘᵢₙ;
c) Initiating the safety processing sequence based on a request from a user-initiated start signal and the enable signal at a controller (6).

12. A method according to claim 11, wherein determining the distance D comprises the following steps:
a1.1) measuring the field strengths of radio signals between the first radio transceiver (5) of the radio remote control (3) and the second radio transceiver (7), and
a1.2) deriving the distance D from the measured field strengths.

13. A method according to one of claims 11 or 12, wherein determining the distance D comprises the following steps:
a2.1) Calculating the distances travelled by the radio remote control (3) based on acceleration values from an accelerometer (9) and/or an inertial measurement unit mounted on the radio remote control (3), and
a2.2) Deriving the distance D from the calculated distances travelled or from the measured field strengths and the calculated distances travelled.

14. A method according to any one of claims 11, 12 or 13, wherein, in step c), the start signal is transmitted from the radio remote control (3) to a control unit (6) of the safety processing plant (2) in response to an input via an input device (4) of the radio remote control (3).

15. A method according to any one of claims 11 to 14, further comprising at least one of the following initialisation steps prior to step a):
i1) establishing a radio link between the first radio transceiver (5) of the radio remote control (3) and the second radio transceiver (7), and
i2) unambiguously pairing the first radio transceiver (5) and the second radio transceiver (7) via addresses uniquely assigned to the first radio transceiver (5) and the second radio transceiver (7), respectively.

16. A method according to claim 15, wherein the unique addresses assigned to the first radio transceiver (5) and the second radio transceiver (7), respectively, are made known to each other in a learning process.

17. A method according to any one of claims 11 to 16, further comprising at least one of the following steps:
d) Determining whether a fall has occurred based on the acceleration values from the accelerometer (9) or on the angular acceleration values from an angular accelerometer (10) mounted on the radio remote control (3), whereby, in step (b), the generation of the enable signal is additionally based on the occurrence of a fall;
e) Transmitting the distance D to the radio remote control (6) and displaying the distance D on a graphical display (15) of the radio remote control (3);
f) Transmitting a progress value of the safety processing operation to the radio remote control (3) and displaying the progress value on the graphical display (15) of the radio remote control (3);
g) continuously recording and monitoring the movement of the radio remote control (3).

18. A method according to any one of claims 11 to 17, further comprising at least one of the following monitoring steps:
p1) continuously checking the volatile memory of a controller (6), preferably by means of a checksum method;
p2) continuously monitoring the non-volatile memory of a controller (6), preferably using a checksum method;
p3) continuously monitoring the operating voltage and a processor of a controller (6), preferably by means of a watchdog;
p4) continuously monitoring an integrated circuit of a controller (6), preferably by means of a plausibility check procedure:

## Revendications

1. Installation de coupe de sécurité fixe (16), adaptée et destinée à la coupe d'un câble, comprenant
un dispositif (1) permettant de commander à distance l'installation de coupe de sécurité (16), comprenant :
- une télécommande radio (3) comportant un premier émetteur-récepteur radio (5) ;
- un dispositif de commande (6) comportant un deuxième émetteur-récepteur radio (7), ledit dispositif de commande (6) étant disposé sur l'installation de coupe de sécurité (16) ;
et
- un système de surveillance de distance (8), conçu pour déterminer une distance D entre la télécommande radio (3) et l'unité de commande (6),
le premier émetteur-récepteur radio (5) et le deuxième émetteur-récepteur radio (7) pouvant être reliés entre eux de manière à permettre la communication et étant agencés pour échanger des données par signaux radio lorsqu'ils sont connectés,
le dispositif de surveillance de distance (8) et au moins la télécommande radio (3) ou la commande (6) étant reliés de manière communicative et étant agencés pour transmettre la distance D ou un signal correspondant à la distance D depuis le dispositif de surveillance de distance (8) vers au moins la télécommande radio (3) ou la commande (6), et
la commande (6) ou la télécommande radio (3) générant un signal d'autorisation pour une opération d'usinage sécurisée à partir de la distance D transmise à la commande (6) ou à la télécommande radio (3) respectivement par la télécommande radio (3) ou du dispositif de surveillance de distance (8) vers la commande (6) ou la télécommande radio (3), respectivement, ainsi qu'à une distance de sécurité prédéterminée Dₘᵢₙ, et est agencée pour transmettre le signal d'autorisation à la commande (6),
la commande étant agencée pour démarrer l'opération d'usinage de sécurité sur la base de la réception d'un signal de démarrage induit par l'utilisateur et du signal d'autorisation au niveau de la commande (6).

2. Dispositif (16) selon la revendication 1, dans lequel le système de surveillance de distance (8) est conçu pour :
- mesurer les intensités de champ des signaux radio entre le premier émetteur-récepteur radio (5) et le deuxième émetteur-récepteur radio (7) et
- déterminer la distance D à partir des intensités de champ mesurées.

3. Dispositif (16) selon l'une des revendications précédentes, dans lequel le système de surveillance de distance (8) est conçu pour :
- calculer les distances parcourues par la télécommande radio (3) sur la base des valeurs d'accélération fournies par un accéléromètre (9) disposé sur la télécommande radio (3) et
- déduire la distance D à partir des distances parcourues calculées ou à partir des intensités de champ mesurées et des distances parcourues calculées.

4. Dispositif (16) selon l'une des revendications précédentes, dans lequel la télécommande radio (3) comporte un dispositif de saisie (4) qui est relié de manière communicante au premier émetteur-récepteur radio (5) et qui est agencé pour émettre le signal de démarrage via le premier émetteur-récepteur radio (5) en réponse à une entrée effectuée à l'aide du dispositif de saisie (4), et dans lequel le contrôleur (6) est agencé pour recevoir le signal de démarrage via le deuxième émetteur-récepteur radio (7).

5. Dispositif (16) selon l'une des revendications précédentes, dans lequel la télécommande radio (3) et l'unité de commande (6) possèdent chacune une adresse unique et peuvent être couplées de manière univoque l'une à l'autre au moyen de ces adresses uniques.

6. Dispositif (16) selon l'une des revendications précédentes, comprenant un système de surveillance des chutes agencé pour détecter la survenue d'une chute,
le dispositif de surveillance des chutes étant conçu pour déduire la survenue d'une chute sur la base des valeurs d'accélération fournies par l'accéléromètre ou des valeurs d'accélération angulaire fournies par un accéléromètre angulaire (10) disposé sur la télécommande radio (3), et
le dispositif de commande (6) ou la télécommande radio (3) étant en outre agencé(e) pour générer le signal d'autorisation en tenant compte de la survenue d'une chute.

7. Dispositif (16) selon l'une des revendications précédentes, dans lequel la commande (6) est reliée à au moins un capteur de l'installation d'usinage de sécurité (2) et est agencée pour lire une valeur d'avancement de l'opération d'usinage de sécurité,
la commande (6) et la télécommande radio (3) étant agencées pour transmettre la valeur d'avancement de la commande (6) à la télécommande radio (3), et
la télécommande radio (3) étant agencée pour afficher la valeur d'avancement à l'aide d'un dispositif d'affichage (12).

8. Dispositif (16) selon au moins l'une des revendications précédentes, dans lequel il est prévu au moins une unité de déplacement spatiale au moyen de laquelle s'effectue une surveillance de la distance et/ou une surveillance des chutes.

9. Installation (16) selon la revendication 8, dans laquelle l'unité de mouvement spatiale est constituée d'une unité de mesure inertielle.

10. Dispositif (16) selon la revendication 9, dans lequel l'unité de mesure inertielle comprend une combinaison spatiale de plusieurs capteurs inertiels, de préférence des accéléromètres, des rotomètres, des capteurs de rotation, des capteurs de couple et des gyroscopes.

11. Procédé de commande à distance d'une installation de découpe de sécurité fixe (16) ou d'une installation de compression de sécurité, comprenant les étapes suivantes :
positionnement de l'installation de découpe de sécurité (2) ;
a) détermination d'une distance D entre un premier émetteur-récepteur radio (5) d'une télécommande radio (3) et un deuxième émetteur-récepteur radio (7) associé à une zone de sécurité de l'installation d'usinage de sécurité (2) ;
b) détermination d'un signal d'autorisation pour une opération d'usinage sécurisée à partir de la distance D déterminée et d'une distance de sécurité prédéfinie Dₘᵢₙ ;
c) Lancement de la procédure de traitement de sécurité sur la base d'une demande émanant d'un signal de démarrage déclenché par l'utilisateur et du signal de validation au niveau d'un contrôleur (6).

12. Procédé selon la revendication 11, dans lequel la détermination de la distance D comprend les étapes suivantes :
a1.1) mesurer les intensités de champ des signaux radio entre le premier émetteur-récepteur radio (5) de la télécommande radio (3) et le deuxième émetteur-récepteur radio (7) ; et
a1.2) le calcul de la distance D à partir des intensités de champ mesurées.

13. Procédé selon l'une des revendications 11 ou 12, dans lequel la détermination de la distance D comprend les étapes suivantes :
a2.1) Calcul des distances parcourues par la télécommande radio (3) à partir des valeurs d'accélération fournies par un accéléromètre (9) et/ou une unité de mesure inertielle, disposée sur la télécommande radio (3), et
a2.2) Détermination de la distance D à partir des distances parcourues calculées ou à partir des intensités de champ mesurées et des distances parcourues calculées.

14. Procédé selon l'une des revendications 11, 12 ou 13, dans lequel, à l'étape c), l'émission du signal de démarrage depuis la télécommande radio (3) vers une unité de commande (6) de l'installation de traitement de sécurité (2) s'effectue en réponse à une entrée effectuée à l'aide d'un dispositif de saisie (4) de la télécommande radio (3).

15. Procédé selon l'une des revendications 11 à 14, comprenant en outre au moins l'une des étapes d'initialisation suivantes avant l'étape a) :
i1) établissement d'une liaison radio entre le premier émetteur-récepteur radio (5) de la télécommande radio (3) et le deuxième émetteur-récepteur radio (7), ainsi que
i2) le couplage univoque du premier émetteur-récepteur radio (5) et du deuxième émetteur-récepteur radio (7) via des adresses attribuées de manière univoque respectivement au premier émetteur-récepteur radio (5) et au deuxième émetteur-récepteur radio (7).

16. Procédé selon la revendication 15, dans lequel les adresses uniques attribuées respectivement au premier émetteur-récepteur radio (5) et au deuxième émetteur-récepteur radio (7) sont communiquées réciproquement au cours d'une procédure d'apprentissage.

17. Procédé selon l'une des revendications 11 à 16, comprenant en outre au moins l'une des étapes suivantes :
d) Détermination de la survenue d'une chute sur la base des valeurs d'accélération fournies par l'accéléromètre (9) ou des valeurs d'accélération angulaire fournies par un accéléromètre angulaire (10) monté sur la télécommande radio (3), la détermination du signal d'autorisation à l'étape b) étant en outre basée sur la survenue d'une chute ;
e) Transmission de la distance D à la télécommande radio (6) et affichage de la distance D sur un écran graphique (15) de la télécommande radio (3) ;
f) Transmission d'une valeur de progression de l'opération de traitement de sécurité à la télécommande radio (3) et affichage de cette valeur de progression sur l'écran graphique (15) de la télécommande radio (3) ;
g) Enregistrement et vérification en continu d'une séquence de mouvements de la télécommande radio (3).

18. Procédé selon l'une des revendications 11 à 17, comprenant en outre au moins l'une des étapes de vérification suivantes :
p1) vérification en continu d'une mémoire volatile d'un contrôleur (6), de préférence au moyen d'un procédé de somme de contrôle ;
p2) vérification continue d'une mémoire non volatile d'un contrôleur (6), de préférence à l'aide d'un procédé de somme de contrôle ;
p3) vérification continue d'une tension de fonctionnement et d'un processeur d'un contrôleur (6), de préférence au moyen d'un chien de garde ;
p4) vérification continue d'un circuit intégré d'un contrôleur (6), de préférence au moyen d'un procédé de contrôle de plausibilité :
